# EUROPÄISCHE PATENTSCHRIFT

(11) **EP 2 014 500 B1**
(45) Veröffentlichungstag und Bekanntmachung des Hinweises auf die Patenterteilung: **14.09.2011**
(21) Anmeldenummer: 08165898.1
(22) Anmeldetag: 04.04.2006
(51) Int. Cl.: B60K 7/00, B66F 9/075, B60K 17/04, B60K 17/30

(54) **Antrieb für ein Flurförderfahrzeug**
Drive for an industrial truck
Entraînement pour un chariot de manutention

(30) Priorität: 15.04.2005 DE 102005017737
(43) Veröffentlichungstag der Anmeldung: 14.01.2009
(62) Teilanmeldung aus: 06723997.0
(73) Patentinhaber: ZF Friedrichshafen AG, 88038 Friedrichshafen (DE)
(72) Erfinder: Bald, Dirk, 99867 Gotha (DE); Habel, Matthias, 99867 Gotha (DE); Streipardt, Peter, 99880 Waltershausen (DE)

(56) Entgegenhaltungen:
- EP-A- 0 697 759
- WO-A-98/19875
- DE-A1- 10 148 457

## Beschreibung

Die Erfindung bezieht sich auf einen Antrieb, insbesondere für ein Flurförderzeug, nach der im Oberbegriff von Anspruch 1 näher definierten Art.

Gattungsgemäße Antriebe bestehen aus einem elektrischen Antriebsmotor, welcher über ein Untersetzungsgetriebe ein Antriebsrad antreibt, um das Fahrzeug in einer Fahrbewegung anzutreiben.

Die DE 102 41 420 A1 offenbart einen Anrieb für ein Flurförderzeug, bei welchem ein horizontal angeordneter Antriebsmotor über ein Untersetzungsgetriebe ein Antriebsrad antreibt, wobei ein Umrichter innerhalb des Motorgehäuses angeordnet ist. Dadurch verlängert sich der Motor in vertikaler Richtung, wodurch der Motor nur in Fahrzeugen mit größerem Platzangebot eingebaut werden kann.

Die DE 102004006722.8 der Anmelderin offenbart einen Antrieb für ein Flurförderzeug, bei welchem der Antriebsmotor mit einem Lenkmotor koaxial angeordnet ist und die Motore vertikal im Fahrzeug angeordnet sind.

Die DE 101 48 457 offenbart einen Antrieb für ein Flurförderzeug gemäß dem Oberbegriff des Anspruchs 1, bei welchem ein vertikal angeordneter Antriebsmotor ein Fahrzeugrad antreibt und eine Leistungselektronik-Einheit oberhalb des Antriebsmotors angeordnet ist.

Der vorliegenden Erfindung liegt die Aufgabe zugrunde, einen Antrieb, insbesondere für Flurförderzeuge, zu schaffen, welcher auf einfache Weise im Fahrzeug montiert werden kann und sich durch eine hohe Betriebssicherheit auszeichnet.

Die Aufgabe wird mit einem, die kennzeichnenden Merkmale des Hauptanspruchs aufweisenden, gattunggemäßen Antrieb gelöst.

Erfindungsgemäß weist der Antrieb eine elektronische Steuerung auf, welche verteilt um die Motorachse des Antriebsmotors angeordnet ist.

Dadurch ist es möglich, ein Antriebssystem zu schaffen, welches sich durch geringere Verkabelungen und einfache Steckverbindungen durch eine hohe Betriebssicherheit auszeichnet und die Montage des Systems vereinfacht wird, da ausschließlich Leitungen zur Spannungsversorgung und Signalleitungen zum Antrieb benötigt werden. Durch die Anordnung der elektronischen Steuerung bei vertikalem Motor an dessem Umfang wird die Baulänge des Gesamtfahrzeugs, insbesondere die Baulänge hinter den Gabeln, nicht vergrößert. Der Antrieb kann für elek-trisch angetriebene Fahrzeuge, wie beispielsweise der Lagertechnik oder Dreirad-Gegengewichtsstapler oder fahrerlose Transportsysteme, wie beispielsweise selbstfahrende Reinigungsmaschinen und Flurförderzeuge, verwendet werden.

In einer weiteren Ausgestaltungsform der Erfindung besteht die elektronische Steuerung aus einem Wechselrichter, welcher sich aus einer Leistungselektronik und einer Signalelektronik zusammensetzt. Die Leistungselek-tronik und Signalelektronik können, je nach Bauraumverhältnissen im Fahrzeug, in einem gemeinsamen Gehäuse am Antriebsmotor angebracht oder im Gehäuse des Antriebsmotors integriert sein oder räumlich getrennt am oder im Antriebsmotor angeordnet sein. Besteht der Antrieb zusätzlich aus einem Antriebsmotor als Fahrmotor und einem Antriebsmotor als Lenkmotor, so besteht die Möglichkeit, die Leistungselektronik des Lenkmotors und die Leistungselektronik des Antriebsmotors räumlich getrennt am Antriebsmotor anzuordnen und die Signalelektronik des Lenkmotors und die Signalelektronik des Antriebsmotors räumlich zusammenzufassen und ebenfalls am Antriebsmotor anzuordnen.

Ausführungsbeispiele sind der Figuren-Beschreibung zu entnehmen. Es zeigen:
- Fig. 1: eine schematische Darstellung eines vertikal angeordneten Fahrzeugmotors und
- Fig. 2: eine schematische Darstellung eines vertikal angeordneten Fahrzeugmotors.

### Fig. 1:

Bei Fahrzeugen, bei welchen sich der Antriebsmotor 2 bei einer Lenkbewegung mitdreht, wie beispielsweise bei deichselgeführten Geräten, ist die Steuerung so um das Motorgehäuse zu verteilen, dass die Steuerung gleichmäßig den Radius des Motors 2 vergrößert, wodurch bei einer Drehung des Motors 2 die Steuerung 3 nicht mit anderen Bauteilen des Fahrzeugs kollidiert. In der Ausgestaltungsform der Fig. 3 ist die Steuerung 3 in drei Baugruppen aufgeteilt, welche gleichmäßig um die Drehachse des Antriebsmotors 2 verteilt angeordnet sind. Auch hier besteht die Möglichkeit, die Steuerung 3 mit dem Gehäuse des Antriebsmotors 2 zu verbinden oder das Gehäuse des Antriebsmotors 2 so auszubilden, dass die Steuerung 3 darin integriert ist. Eine Aufteilung in Leistungselektronik und Steuerelektronik ist ebenfalls möglich.

### Fig. 2:

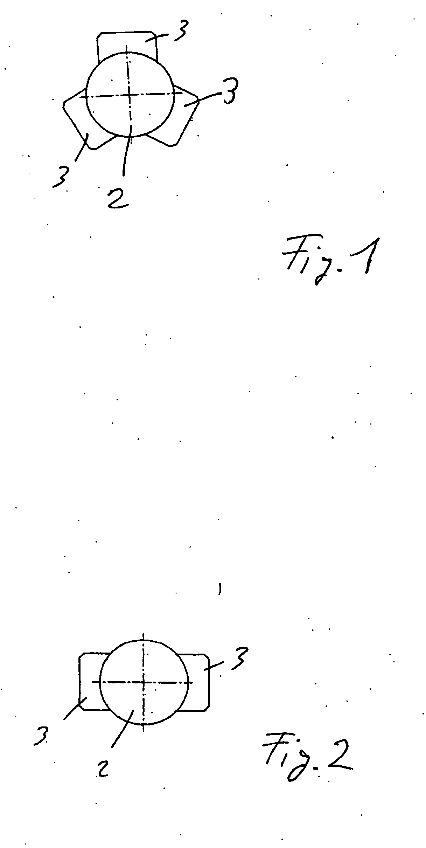

Der Antriebsmotor 2 ist, wie der Antriebsmotor in Fig. 1, als mitdrehender Motor bei Lenkbewegungen ausgebildet, die Steuerung 3 ist jedoch in ihren Abmessungen so ausgebildet, dass sie innerhalb des Hüllkreises des Fahrzeugrades angeordnet werden kann, wodurch es ermöglicht wird, die elektronische Steuerung 3 in zwei Baugruppen aufzuteilen, welche sich gegenüberliegend am Umfang des Antriebsmotors 2 befinden. Ebenso besteht die Möglichkeit, bei Antrieben mit mitdrehenden Motoren die elektronische Steuerung so auszubilden, dass sie vollständig den Umfang des Antriebsmotors 2 umgibt. Indem die elektronische Steuerung 3 am Umfang des Antriebsmotors 2 angeordnet ist, wird der Antriebsmotor 2 nicht in vertikaler Richtung verlängert, was bei Antriebssystemen mit mitdrehenden Motoren aufgrund des geringen Bauraums in vertikaler Richtung durch eine vertikal über dem Motor angeordnete Steuerung nicht möglich ist.

In einer weiteren Ausgestaltungsform der Fig. 1 bis 2 wird die elektronische Steuerung durch das Schmier- und Kühlmittel des Antriebsmotors oder des Untersetzungsgetriebes gekühlt. Hierbei wird die gesamte Oberfläche des Getriebegehäues zur Wärmeabfuhr benutzt, wodurch das Kühlschmiermittel gekühlt wird und wieder zur Wärmeaufnahme für die elektronische Steuerung bereit steht. Indem die elektronische Steuerung das Kühlschmiermittel erwärmt, wird auch das Untersetzungsgetriebe bzw. das Kühl- und Schmiermittel, welches das Untersetzungsgetriebe schmiert, schneller erwärmt, was zu einem besseren Wirkungsgrad, insbeondere in der Inbetriebnahmephase des Fahrzeugs, führt.

In einer weiteren Ausgestaltungsform der Erfindung besteht die Möglichkeit, das Gehäuse der elektronischen Steuerung bzw. das Gehäuse im Bereich der elektronischen Steuerung durch Kühlrippen zusätzlich zu kühlen. Ebenso besteht die Möglichkeit, Kanäle in das Gehäuse einzubringen, durch welche Kühlmittel oder Kühlluft strömt, um die elektronische Steuerung zu kühlen.

Erfindungsgemäß wird ein Antrieb für Flurförderzeuge geschaffen, welcher sich durch eine geringere Verkabelung, verringerte Fehleranfälligkeit, insbesondere durch die Verringerung der Steck- und Schraubkontakte, sowie eine einfacherere Montage auszeichnet.

### Bezugszeichen

- 2: Antriebsmotor
- 3: elektronische Steuerung

## Patentansprüche

1. Antrieb für ein Flurförderzeug, bei welchem ein Antriebsmotor (2) mit einer um eine Drehachse drehende Welle über ein Untersetzungsgetriebe ein Antriebsrad antreibt, wobei der Antriebsmotor (2) im eingebauten Zustand im Fahrzeug vertikal angeordnet ist, und das Antriebsrad im Sinne einer Lenkbewegung drehbar ausgeführt ist, wobei der Antriebsmotor (2) während der Lenkbewegung der Drehbewegung des Antriebsrades folgt, wobei eine elektronische Steuerung (3) parallel zur Drehachse der Welle am oder im Gehäuse des Antriebsmotors (2) angeordnet ist, **dadurch gekennzeichnet, dass** die Steuerung (3) verteilt um die Motorachse angeordnet ist.

2. Antrieb nach Anspruch 1, **dadurch gekennzeichnet, dass** die elektronische Steuerung (3) durch das Kühlschmiermittel des Antriebes kühlbar ist.

3. Antrieb nach einem der obigen Ansprüche, **dadurch gekennzeichnet, dass** die elektronische Steuerung (3) ein Gehäuse aufweist, an welchem Kühlrippen angeordnet sind.

4. Antrieb nach einem der obigen Ansprüche, **dadurch gekennzeichnet, dass** das Gehäuse des Antriebes (1) Kanäle in Längsrichtung des Motors (2) aufweist, durch welche ein Kühlstrom in Form von Kühlmittel oder Luft leitbar ist.

5. Antrieb nach einem der obigen Ansprüche, **dadurch gekennzeichnet, dass** die Motore und die Steuerung (3) bei Fremdkühlung mit dem gleichen Medium gleichzeitig gekühlt werden.

## Claims

1. Drive for an industrial truck, in which a drive motor (2) with a shaft rotating about an axis of rotation drives a driving wheel via a reducing gear, the drive motor (2) being arranged vertically in the vehicle in the installed state, and the driving wheel being designed so as to be capable of rotating in the sense of a steering movement, the drive motor (2) following the rotary movement of the driving wheel during the steering movement, an electronic controller (3) being arranged parallel to the axis of rotation of the shaft on or in the housing of the drive motor (2), **characterized in that** the controller (3) is arranged distributed around the motor axis.

2. Drive according to Claim 1, **characterized in that** the electronic controller (3) can be cooled by the cooling lubricant of the drive.

3. Drive according to one of the above claims, **characterized in that** the electronic controller (3) has a housing, on which cooling ribs are arranged.

4. Drive according to one of the above claims, **characterized in that** the housing of the drive (1) has channels in the longitudinal direction of the motor (2), through which channels a cooling flow in the form of coolant or air can be guided.

5. Drive according to one of the above claims, **characterized in that** the motors and the controller (3) are cooled simultaneously with the same medium in the case of external cooling.

## Revendications

1. Entraînement pour un chariot de manutention, dans lequel un moteur d'entraînement (2) d'un arbre tournant autour d'un axe de rotation entraîne une roue d'entraînement par le biais d'un réducteur, le moteur d'entraînement (2) étant disposé verticalement dans l'état monté dans le véhicule, et la roue d'entraînement étant réalisée de manière rotative dans le sens d'un mouvement de direction, le moteur d'entraînement (2) pendant le mouvement de direction suivant le mouvement de rotation de la roue d'entraînement, une commande électronique (3) étant disposée parallèlement à l'axe de rotation de l'arbre sur ou dans le boîtier du moteur d'entraînement (2), **caractérisé en ce que** la commande (3) est disposée de manière répartie autour de l'axe du moteur.

2. Entraînement selon la revendication 1, **caractérisé en ce que** la commande électronique (3) peut être refroidie par le lubrifiant de refroidissement de l'entraînement.

3. Entraînement selon l'une quelconque des revendications précédentes, **caractérisé en ce que** la commande électronique (3) présente un boîtier sur lequel sont disposées des nervures de refroidissement.

4. Entraînement selon l'une quelconque des revendications précédentes, **caractérisé en ce que** le boîtier de l'entraînement (1) présente des canaux dans la direction longitudinale du moteur (2), à travers lesquels peut être guidé un flux de refroidissement sous forme de réfrigérant ou d'air.

5. Entraînement selon l'une quelconque des revendications précédentes, **caractérisé en ce que** les moteurs et la commande (3) sont refroidis simultanément par le même fluide lors d'un refroidissement extérieur.
